Europäisches Patentamt

European Patent Office

Office européen des brevets

(19)

(11) Veröffentlichungsnummer : **0 347 594 B1**

# (12) EUROPÄISCHE PATENTSCHRIFT

(45) Veröffentlichungstag der Patentschrift :
25.09.91 Patentblatt 91/39

(51) Int. Cl.⁵ : **B60K 17/04, F16H 47/04**

(21) Anmeldenummer : 89109188.6

(22) Anmeldetag : 22.05.89

(54) Antriebseinrichtung eines Fahrzeugs.

(30) Priorität : 24.06.88 DE 3821290

(43) Veröffentlichungstag der Anmeldung :
27.12.89 Patentblatt 89/52

(45) Bekanntmachung des Hinweises auf die
Patenterteilung :
25.09.91 Patentblatt 91/39

(84) Benannte Vertragsstaaten :
CH DE FR GB IT LI SE

(56) Entgegenhaltungen :
EP-A- 0 195 452
EP-A- 0 234 136

(56) Entgegenhaltungen :
DE-A- 3 609 907
DE-A- 3 621 166
DE-A- 3 622 045
DE-A- 3 624 989
DE-C- 2 904 572

(73) Patentinhaber : MAN Nutzfahrzeuge
Aktiengesellschaft
Dachauer Strasse 667 Postfach 50 06 20
W-8000 München 50 (DE)

(72) Erfinder : Hagin, Faust, Dipl.-Ingenieur
Poccistrasse 2
W-8000 München 2 (DE)
Erfinder : Fienker, Helmut, Dr.
Herzog-Georg-Weg 13
W-8011 Zorneding (DE)

**Beschreibung**

Die Erfindung betrifft eine Antriebseinrichtung eines Fahrzeuges mit einem hydrostatisch-mechanischen Leistungsverzweigungsgetriebe mit Merkmalen der im Oberbegriff des Anspruches 1 angegebenen Art.

Eine Antriebseinrichtung mit solchen Merkmalen ist beispielsweise aus der DE-PS 2904572 bekannt. Bei hiernach realisierten Fahrzeug-Antrieben kam ein hydromechanisches Leistungsverzweigungsgetriebe mit zwei Hydrowandlern in Form von verstellbaren, als Motor oder Pumpen betreibbaren Hydromaschinen zur Anwendung, von denen jeder eine Eckleistung in der Größenordnung der Leistung des Antriebsmotors übertragen kann. Durch diese Antriebskonstellation ist zwischen Antriebsmotor und Achsantriebsstrang eine Momentenerhöhung um ca. Faktor 5 erzielbar.

Diese bekannte Lösung läßt einen Betrieb in einem breiten Overdrive-Bereich zu, allerdings bei abnehmender Motordrehzahl und fallender Getriebeabtriebsdrehzahl sowie unter Inkaufnahme einer ab einem Drehzahlverhältnis von $n_{Ausgang} : n_{Eingang} >$ ca. 1,5 auftretenden und zunehmenden Blindleistung, das heißt sinkendem Wirkungsgrad. Letzteres wirkt sich insbesondere bei Verwendung der Antriebseinrichtung als Pkw-Antrieb aufgrund der großen Drehzahlspanne des dort verwendeten Antriebsmotors negativ aus.

Bei verschiedenen Einsatzfällen reicht die vorgenannte Momentenerhöhung (um Faktor 5) nicht aus, um einen ausreichenden Gesamtwandlungsbereich zu bekommen. Ein ausreichender Gesamtwandlungsbereich wäre bei Schwerst-Ketten- oder -Radfahrzeugen beispielsweise erst durch eine Momentenerhöhung um Faktor 10 bei voller Motorleistung gegeben. Diesem Problem könnte beispielsweise durch die Verwendung leistungsstärkerer Hydrowandler abgeholfen werden. Solche größeren Hydrowandler würden aber nicht nur das Leistungsverzweigungsgetriebe insgesamt räumlich vergrößern, vielmehr müßten auch die hydraulischen Anlagenteile wie Leitungen, Steuerorgane, Ventile und dergleichen auf den größeren Fluiddurchsatz mit erhöhter Leistung ausgelegt sein, was ersichtlicherweise das Leistungsverzweigungsgetriebe in erheblichem Maß verteuern würde. Außerdem steht für diese Maßnahmen in der Regel nicht der notwendige Bauraum zur Verfügung.

Es ist daher Aufgabe der Erfindung, eine Antriebseinrichtung der eingangs genannten Art so umzugestalten, daß trotz Verwendung leistungsgleicher Hydrowandler und des gleichen vierwelligen Planetendifferentialgetriebes wie bisher eine Erweiterung des effektiv verfügbaren Overdrive-Bereiches zumindest ohne Zwangsreduzierung der Abtriebsdrehzahl des hydrostatisch-mechanischen Leistungsverzweigungsgetriebes bei steigendem Drehzahlverhältnis $n_{Ausgang} : n_{Eingang}$ und eine Vermeidung bzw. zumindest Reduzierung der hydrostatischen Blindleistung am Ende des Overdrive-Bereiches erzielbar ist.

Diese Aufgabe ist bei einer Antriebseinrichtung der gattungsgemäßen Art erfindungsgemäß durch deren weitere Ausgestaltung entsprechend den kennzeichnenden Merkmalen des Anspruches 1 gelöst.

Grundsätzlich ist dabei das Leistungsverzweigungsgetriebe durch Hinzufügen einfacher Getriebezüge und schaltbarer Kupplungen zu dem bekannten Aufbau desselben für einen extremen Overdrive-Betrieb mit einem Drehzahlverhältnis zwischen ausgangsseitiger und eingangsseitiger Hauptwelle von bis zu ca. 2 ausgelegt. Regelungstechnisch wird dabei derart auf dieses so gestaltete Leistungsverzweigungsgetriebe eingewirkt, daß jener der beiden Hydrowandler, der im ersten und zweiten Betriebsbereich mit dem Hohlrad des Planetendifferentiales über die schaltbare Kupplung SK3 verbunden ist, beim Übergang vom zweiten Betriebsbereich in wenigstens einen weiteren in den Overdrive-Betrieb führenden Betriebsbereich durch Betätigung schaltbarer Kupplungen SK3, SK4, SK5 von seiner momentanen Antriebsverbindung getrennt und bei Synchrondrehzahl getrieblich mit einer der beiden Hauptwellen, also entweder der eingangsseitigen oder ausgangsseitigen Hauptwelle verbunden wird.

Vorzugsweise ist der in den Overdrive-Betrieb gehende Betriebsbereich in zwei definierte Teilbereiche untergliedert, dergestalt, daß ein dritter Betriebsbereich mit $n_{Ausgang} : n_{Eingang}$ zwischen ca. 0,8 und ca. 1,4 und ein vierter Betriebsbereich mit $n_{Ausgang} : n_{Eingang}$ zwischen ca. 1,5 und ca. 2 gegeben ist.

Wird die erfindungsgemäße Antriebseinrichtung in einem Schwerst-Ketten-oder -Radfahrzeug verwendet, dann erweist es sich als zweckmäßig, beim Übergang vom zweiten in den dritten Betriebsbereich den besagten Hydrowandler antriebsmäßig vom Hohlrad des Planetendifferentialgetriebes zu trennen und mit der eingangsseitigen Hauptwelle des Leistungsverzweigungsgetriebes zu verbinden. Bei konstant bleibender Maximaldrehzahl des Antriebsmotors und konstant bleibender Drehzahl des an die eingangsseitige Hauptwelle angeschlossenen Hydrowandlers und bei sinkender Drehzahl des anderen als Pumpe wirkenden Hydrowandlers kann sich somit die Drehzahl der ausgangsseitigen Hauptwelle des Leistungsverzweigungsgetriebes in den Overdrive-Bereich erhöhen. Diese Ausgangsdrehzahlerhöhung setzt sich bis zum gewünschten Faktor 2 fort nach Wechsel vom dritten in den vierten Betriebsbereich, wobei die vorher gegebene Arbeitsweise der beiden Hydrowandler beim Übergang vom dritten in den vierten Betriebsbereich umgewechselt, d.h. von Motor auf Pumpenfunktion bzw. von Pumpen- auf Motorfunktion umgeschaltet wird. Im Augenblick der Zuschaltung des besagten anderen Hydrowandlers an die eingangsseitige Hauptwelle ergibt sich eine Erhöhung des hydrostatischen Leistungsanteiles von vorher ca. 30% auf dann ca. 60%. Diese Blindleistung fällt jedoch nicht ins Gewicht, weil sie nur äußerst kurzzeitig anfällt, denn es ist nach dieser Schaltung schnell ein anderer Grenzpunkt erreicht, nämlich dann, wenn der an die eingangsseitige Hauptwelle angeschlossene Hydrowandler eine Schwenkwinkeleinstellung "Null" erreicht hat und der andere Hydrowandler auf vollen Schwenkwinkel verstellt ist.

Wird die erfindungsgemäße Antriebseinrichtung in einem Personenkraftwagen verwendet, so ist es im Gegensatz zu Schwerstfahrzeugen in diesem Fall zweckmäßiger, den besagten Hydrowandler antriebsmäßig vom Hohlrad des Planetendifferentialgetriebes zu trennen und mit der ausgangsseitigen Hauptwelle des Leistungsverzweigungsgetriebes zu verbinden. Dies hat den Vorteil, daß keine Blindleistung im dritten Betriebsbereich anfällt und der hydrostatische Anteil an der Gesamtleistung sich nur auf weniger als 50% erhöht.

Dies ändert sich erst beim Übergang vom dritten in den vierten Betriebsbereich, in dem der hydrostatische Anteil an der Gesamtleistung höher wird und damit als Blindleistung anfallen würde. Bei Personenkraftwagen ist in der Regel ein Fahrbetrieb in diesem extrem hohen Overdrive-Bereich äußerst selten, so daß sich die möglichen Nachteile in diesem Betriebsbereich in der Praxis kaum einstellen werden.

Der Idealzustand ist an sich mit einem Leistungsverzweigungsgetriebe erreichbar, das die Vorteile der Schaltung bei Pkw-Anwendung im dritten Betriebsbereich und die Vorteile der Schaltung bei Schwerstfahrzeug-Anwendung im vierten Betriebsbereich in sich vereinigt, damit die jeweils nachteiligen Blindleistungsbereiche total eliminiert. Solche Lösungen sind in den Ansprüchen 7 und 8 angegeben. Die Lösung gemäß Anspruch 7 besteht darin, daß der besagte Hydrowandler

a) beim Übergang vom zweiten in den dritten Betriebsbereich mittels einer schaltbaren Kupplung SK3 getrieblich vom Hohlrad des Planetendifferentialgetriebes getrennt und mittels einer schaltbaren Kupplung SK5 getrieblich mit der ausgangsseitigen Hauptwelle des Leistungsverzweigungsgetriebes verbunden wird und dieser Schaltzustand bis zum Ende des dritten Betriebsbereiches erhalten bleibt, und

b) beim Übergang vom dritten auf den vierten Betriebsbereich über die Kupplung SK5 wieder von der ausgangsseitigen Hauptwelle getrennt und über eine schaltbare Kupplung SK4 getrieblich mit der eingangsseitigen Hauptwelle verbunden wird, welcher Schaltzustand dann bis zum Ende des vierten Betriebsbereiches erhalten bleibt.

Im Fall gemäß Anspruch 8 besteht die optimale Lösung darin, daß der besagte Hydrowandler

a) beim Übergang vom zweiten in den dritten Betriebsbereich mittels einer schaltbaren Kupplung SK3 getrieblich vom Hohlrad des Planetendifferentialgetriebes getrennt und mittels einer schaltbaren Kupplung SK5 getrieblich mit der ausgangsseitigen Hauptwelle des Leistungsverzweigungsgetriebes verbunden wird,

b) vor der Drehrichtungsumkehr des zweiten Hydrowandlers über die Kupplung SK5 wieder von der ausgangsseitigen Hauptwelle getrennt und über die schaltbare Kupplung SK4 mit der eingangsseitigen Hauptwelle verbunden wird, in welchem Stadium ein Betrieb in einem vierten Betriebsbereich erfolgt, und

c) nach Umkehr der Drehrichtung des zweiten Hydrowandlers in einem anschließenden letzten, fünften Betriebsbereich über die Kupplung SK4 mit der eingangsseitigen Hauptwelle bis zum Ende des Gesamtwandlungsbereiches verbunden bleibt.

Diese beiden Lösungen sind funktionsseitig und wirkungsseitig optimal, haben jedoch den Nachteil, daß ihnen das wegen der fünf Kupplungen und zusätzlicher Getriebezüge den meisten Platz beanspruchendste und teuerste Leistungsverzweigungsgetriebe zugrunde liegt. Im Zuge einer Serienfertigung lassen sich diese Nachteile jedoch minimieren und werden dann von den Wirkungsgradvorteilen erheblich überwogen.

Nachstehend ist die erfindungsgemäße Antriebseinrichtung beispielhaft anhand der Zeichnung noch näher erläutert. In der Zeichnung zeigen :

Fig. 1  eine Ausführungsform der erfindungsgemäßen Antriebseinrichtung, insbesondere geeignet für Schwerst-Ketten- oder -Radfahrzeuge,

Fig. 2  eine Ausführungsform der erfindungsgemäßen Antfiebseinrichtung, insbesondere geeignet für Personenkraftwagen,

Fig. 3  eine best-mode Ausführungsform der erfindungsgemäßen Antriebseinrichtung.

In den Figuren sind gleiche bzw. einander entsprechende Teile mit gleichem Bezugszeichen angezogen.

Von der Antriebseinrichtung des Fahrzeuges sind in den Figuren mit 1 ein Antriebsmotor, beispielsweise Dieselmotor, mit 2 ein hydrostatisch-mechanisches Leistungsverzweigungsgetriebe, mit 3 ein Verteiler- und-/oder Lenkgetriebe, mit 3/1 bzw. 3/2 die beiderseits des letzteren abgehenden Achswellen und mit 3/3 bzw. 3/4 die mit letzteren in Verbindung stehenden Antriebsräder bezeichnet. Bei diesen Antriebsrädern handelt es sich im Fall eines Kettenfahrzeuges um die die Ketten antreibenden Kettenräder und im Fall von Radfahrzeugen um die angetriebenen Räder derselben.

Das Leistungsverzweigungsgetriebe 2 weist ein Planetendifferentialgetriebe 4 und wenigstens zwei Hydrowandler 5, 6 auf. Bei letzteren handelt es sich um verstellbare Hydromaschinen, die jeweils in beiden Richtungen als Motor oder Pumpe betrieben werden können und über hydraulische Leitungen 7, 8 miteinander in Verbindung stehen.

Mit 9 ist die eingangsseitige Hauptwelle und mit 10 die ausgangsseitige Hauptwelle des Leistungsverzweigungsgetriebes 2 bezeichnet. Die eingangsseitige Hauptwelle 9 kann entweder direkt mit der Kurbelwelle 1/1 gekuppelt oder, wie in den Figuren dargestellt, über ein Untersetzungsgetriebe 1/2 getrieblich an die Kurbelwelle 1/1 des Antriebsmotors 1 angeschlossen sein. An der ausgangsseitigen Hauptwelle 10 ist die zum Verteiler- und/oder Lenkgetriebe 3 hinführende Verbindungswelle 11 angeschlossen. Das Untersetzungsgetriebe 1/2 dient zur Vermeidung zu hoher Drehzahlen im Leistungsverzweigungsgetriebe 2.

Das Planetendifferentialgetriebe 4 umfaßt im dargestellten Ausführungsbeispiel ein fest mit der eingangsseitigen Hauptwelle 9 verbundenes großes Sonnenrad 12, ein kleines Sonnenrad 13, mehrere jeweils auf einem fest mit der ausgangsseitigen Hauptwelle 10 verbundenen Steg 14 drehbar gelagerte Doppelplanetenräder 15, 16, eine mit dem Steg 14 fest koaxial verbundene Hohlwelle 17 sowie ein Hohlrad 18. Letzteres besitzt eine Innenverzahnung 19, mit der die Verzahnungen der Planetenräder 16 kämmen. Das kleine Sonnenrad ist drehfest mit einer Hohlwelle 20 verbunden, die auf der eingangsseitigen Hauptwelle 9 gelagert ist, außerdem ein Zahnrad 21 fest trägt und die Hohlwelle 17 lagert.

Mit SK3 ist eine schaltbare Kupplung bezeichnet, über deren Schaltmuffe 39 eine Verbindung zwischen dem Hohlrad 18 und einem Zahnrad 22 herstellbar bzw. lösbar ist. Dieses Zahnrad 22 bildet zusammen mit einem auf einer Nebenwelle 40 fest angeordneten Zahnrad 41 und einem Zahnrad 23, das fest auf der Welle 24 sitzt, die Antriebsverbindung zum Hydrowandler 5. Die Drehzahl der ausgangsseitigen Hauptwelle 10 summiert sich aus den Drehzahlen des großen Sonnenrades 12 und des Hohlrades 18, welche die Umlaufgeschwindigkeit der Planetenräder 15 bzw. des Steges 14 festlegen. Der Hydrowandler 5 bewirkt bei geschlossener Kupplung SK3 durch seine Drehzahl und Drehrichtung über die Zahnräder 23, 41, 22 und das Hohlrad 18 dessen Drehzahl und Drehrichtung.

Das auf der Hohlwelle 20 sitzende Zahnrad 21 kämmt mit einem drehbar, aber axial gesichert auf einer weiteren Nebenwelle 25 gelagerten Zahnrad 26. Letzteres trägt eine Mitnehmerscheibe 26 und ist über die auf einer fest an der Nebenwelle 25 angeordneten Mitnehmer 38 axial verschiebbare Schaltmuffe 28 einer schaltbaren Kupplung SK1 mit der Nebenwelle 25 in bzw. außer Antriebsverbindung bringbar. Die Nebenwelle 25 kann direkt die mechanische Verbindung zwischen Planetendifferentialgetriebe 4 und Hydrowandler 6 herstellen, in welchem Fall letzterer dann mit seiner Welle direkt mit der Nebenwelle verbunden wäre. Im dargestellten Beispiel ist eine indirekte Verbindung gegeben, bei der die Nebenwelle 25 ein Zahnrad 29 drehfest trägt, das als Teil einer Getriebeübersetzung zum Hydrowandler 6 mit einem Zahnrad 30 kämmt, das drehfest auf einer die mechanische Verbindung zum Hydrowandler 6 herstellenden Welle 31 sitzt.

Der Hydrowandler 6 ist über zwei unterschiedliche Getriebeübersetzungen wahlweise mit der ausgangsseitigen Hauptwelle 10 oder dem kleinen Sonnenrad 13 verbindbar. Die eine erfolgt, wie bereits erwähnt, von der Hohlwelle 20 her mit dem Zahnrad 21 über das Zahnrad 26 und die Kupplung SK1 auf die Nebenwelle 25 und von dieser über den Getriebezug 29, 30. Die andere der beiden Getriebeübersetzungen ist dadurch realisiert, daß an der mit dem Steg 14 fest verbundenen Hohlwelle 17 drehfest ein Mitnehmerrad 32 angeordnet ist, die eine axial zwischen einer antriebslosen O-Stellung und Antriebsübertragungsstellung verschiebbare Schaltmuffe 33 als Teil einer schaltbaren Kupplung SK2 trägt. In Antriebsübertragungsstellung steht das Mitnehmerrad 32 über die Schaltmuffe 33 der Kupplung SK2 mit einem Mitnehmerrad 34 in Wirkverbindung, das über eine auf der Hohlwelle 17 gelagerte Nabe 35 fest mit einem Zahnrad 36 verbunden ist, welches wiederum mit einem drehfest auf der Nebenwelle 25 angeordneten Zahnrad 37 kämmt. Die Übersetzung Zahnrad 37/Zahnrad 36 trägt beispielsweise 1 : 4,5 und ist größer als das beispielsweise 1 : 1,5 betragende Übersetzungsverhältnis von Zahnrad 26/Zahnrad 21.

Die genannte erste Getriebeübersetzung zwischen ausgangsseitiger Hauptwelle 10 und Hydrowandler 6 ist in einem ersten Betriebsbereich des Fahrzeuges wirksam, bei dem ein Drehzahlverhältnis zwischen ausgangsseitiger Hauptwelle 10 und eingangsseitiger Hauptwelle 9 mit $n_{Ausgang} : n_{Eingang} \leqq$ ca. 50% gegeben ist. Dabei befindet sich die Schaltmuffe 33 der Kupplung SK2 in Wirkverbindung mit der Mitnehmerscheibe 34, d.h. SK2 ist geschlossen. Hierdurch ist der Hydrowandler 6 über die Welle 31, die Zahnräder 30, 29, die Nebenwelle 25 und die Zahnräder 37, 36 mit der Hohlwelle 17 und damit mit dem Steg 14 des Planetendifferentialgetriebes 4 verbunden. Der Hydrowandler 5 arbeitet in diesem Fall bei einer Drehrichtung des Hohlrades 18 umgekehrt zur Drehrichtung des motorseitig angetriebenen großen Sonnenrades 12 als Pumpe und liefert die umgesetzte Leistung an den Hydrowandler 6. Dieser arbeitet als Motor und treibt die Welle 31 an, wodurch Leistung über vorgenannten Getriebeweg an die ausgangsseitige Hauptwelle 10 übertragen wird.

Am Ende dieses ersten Betriebsbereiches hat die Drehzahl des Hydrowandlers 5 soweit abgenommen, daß dieser ganz bzw. nahezu stillsteht. In diesem Fall wird praktisch die gesamte Leistung des Antriebsmotors 1 vom Planetendifferentialgetriebe 4 allein mechanisch auf die ausgangsseitige Hauptwelle 10 des Leistungsverzweigungsgetriebes 2 übertragen. In dieser Situation erfolgt, sofern das Fahrzeug weiter beschleunigt werden soll, der Übergang in den zweiten Betriebsbereich, bei dem ein Drehzahlverhältnis zwischen ausgangsseitiger Hauptwelle 10 und eingangsseitiger Hauptwelle 9 mit $n_{Ausgang} : n_{Eingang} \geq$ ca. 50% $\leq$ ca. 80% gegeben ist. Dieser Übergang erfolgt schaltungsmäßig durch Öffnen der Kupplung SK2, das heißt, Verschieben der Schaltmuffe 33 in neutrale antriebslose O-Stellung, und Schließen der Kupplung SK1, so daß dann die Getriebeübersetzung zwischen kleinem Sonnenrad 13 und Hydrowandler 6 wirksam ist, wobei das Zahnrad 26 dann an die Nebenwelle 25 angekuppelt ist. Die Antriebsleistung für den nun als Pumpe arbeitenden Hydrowandler 6 wird damit vom kleinen Sonnenrad 13 her über die Hohlwelle 20, die Zahnräder 21, 26, die Nebenwelle 25, die Zahnräder 29, 30 und die Welle 31 übertragen. In diesem zweiten Betriebsbereich arbeitet mithin der Hydrowandler 5, bei gleicher Drehrichtung des Hohlrades 18 und großen Sonnenrades 12 wie vorher, als Motor, der seine Antriebsleistung vom als Pumpe arbeitenden Hydrowandler 6 über die hydraulischen Verbindungsleitungen 7, 8 erhält.

Erfindungsgemäß ist das Leistungsverzweigungsgetriebe 2 auch für einen extremen Overdrive-Betrieb mit einem Drehzahlverhältnis zwischen ausgangsseitiger Hauptwelle 10 und eingangsseitiger Hauptwelle 9 mit $n_{Ausgang} : n_{Eingang} >$ ca. 1,5 bis ca. 2 ausgelegt.

Vorzugsweise wird dieser in den Overdrive-Betrieb gehende Betriebsbereich in zwei Teilbereiche untergliedert, dergestalt, daß ein dritter Betriebsbereich mit $n_{Ausgang} : n_{Eingang}$ von ca. 80% bis ca. 140% reicht und ein vierter Betriebsbereich mit $n_{Ausgang} : n_{Eingang}$ von ca. 140% bis 200% reicht. Der Overdrive-Betrieb kann aber auch in drei Bereiche untergliedert sein.

Der besagte Overdrive-Betrieb ist durch Hinzufügung relativ einfacher Getriebezüge und schaltbarer Kupplungen zum vorhergehend beschriebenen Aufbau des Leistungsverzweigungsgetriebes realisierbar.

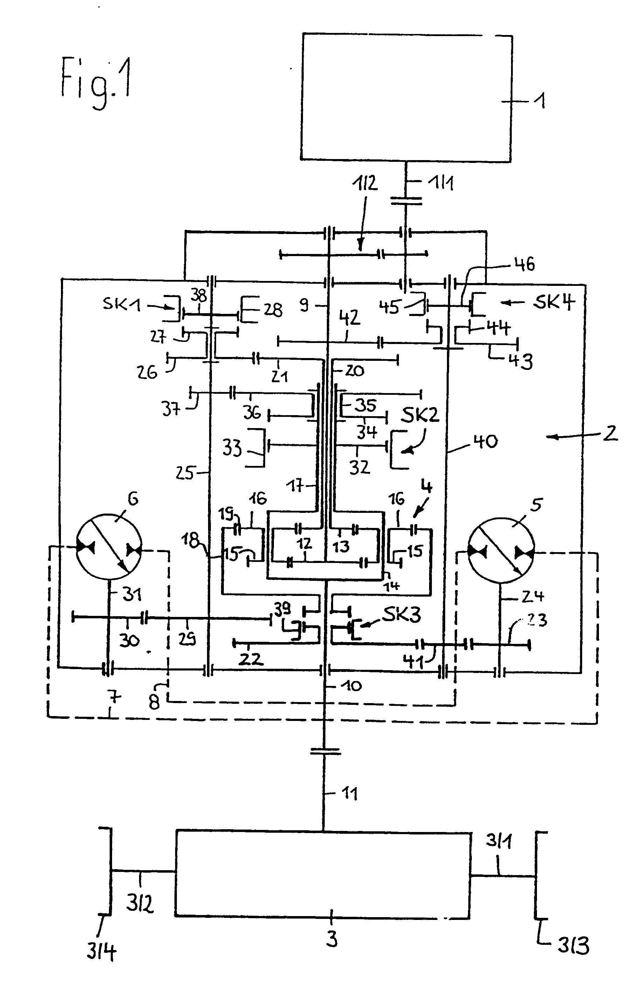

Wie aus Fig. 1 ersichtlich, kann es sich dabei um ein fest auf der eingangsseitigen Hauptwelle 9 sitzendes Zahnrad 42 und ein mit diesem kämmendes durchmessergrößeres Zahnrad 43 handeln, das lose drehbar, aber axial gesichert auf der ersten Nebenwelle 40 gelagert ist und eine Mitnehmerscheibe 44 trägt, über welche es durch die Schaltmuffe 45 einer schaltbaren Kupplung SK4 an die Nebenwelle 40 ankuppelbar ist. Die Schaltmuffe 45 ist auf einer fest an der Nebenwelle 40 angeordneten Mitnehmerscheibe 46 axial aus einer antriebslosen Nullstellung in Kupplungsverbindung mit der Mitnehmerscheibe 44 und zurück verschiebbar. Eine solche Antriebseinrichtung eignet sich gut für Einsatz bei Schwerstfahrzeugen, wie Kettenfahrzeugen oder Schwernutzfahrzeugen.

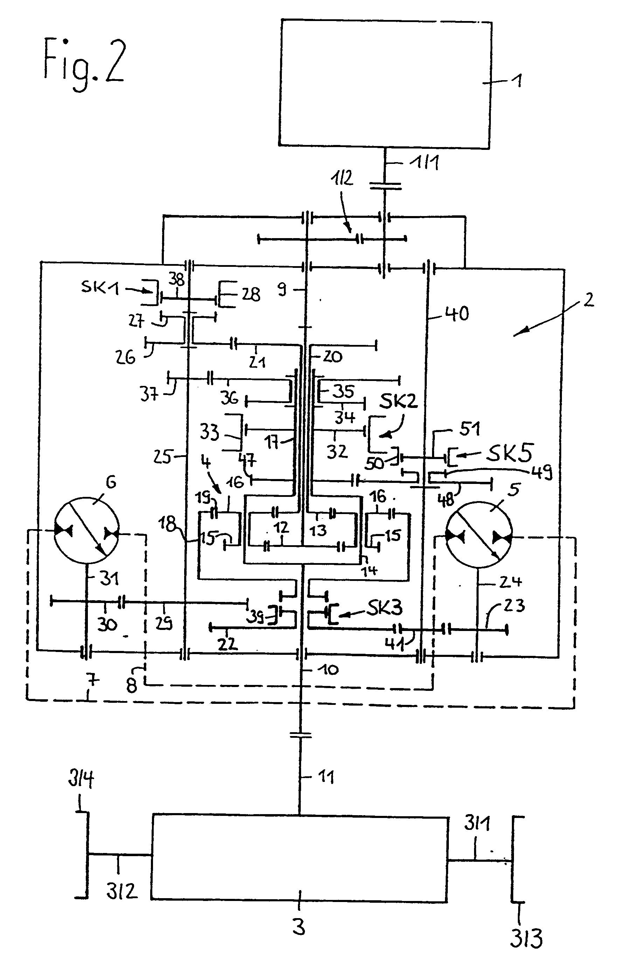

Wie demgegenüber aus Fig. 2 ersichtlich, kann es sich bei den den Overdrive-Betrieb ermöglichenden zusätzlichen Organen auch um eine mit der ausgangsseitigen Hauptwelle 10 mitrotierende Verzahnung 47 und ein mit dieser kämmendes durchmessergrößeres Zahnrad 48 handeln, das lose drehbar, aber axial gesichert, auf der ersten Nebenwelle 40 gelagert ist und eine Mitnehmerscheibe 49 trägt, über welche es durch die Schaltmuffe 50 einer schaltbaren Kupplung SK5 an die Nebenwelle 40 ankuppelbar ist. Die Verzahnung 47 kann Teil eines Zahnrades sein, das fest entweder an der Hohlwelle 17, dem Steg 14 oder der ausgangsseitigen Hauptwelle 10 angeordnet ist. Die Schaltmuffe 50 der Kupplung SK5 ist auf einer fest an der Nebenwelle 40 angeordneten Mitnehmerscheibe 51 axial aus einer antriebslosen Nullstellung in Kupplungsverbindung mit der Mitnehmerscheibe 49 und zurück verschiebbar. Diese Antriebseinrichtung eignet sich gut für den Einsatz in Personenkraftwagen.

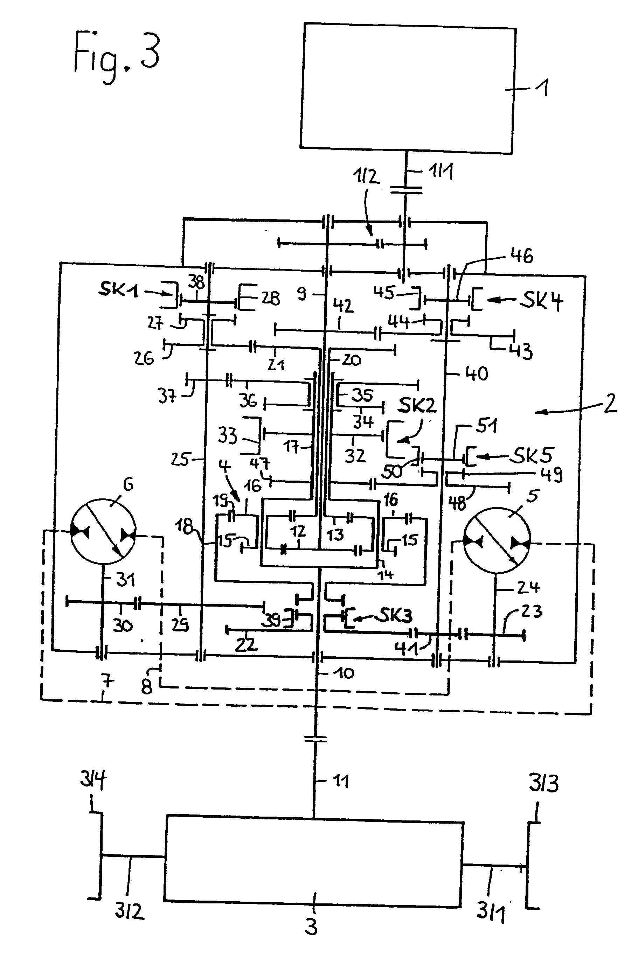

Wie demgegenüber wiederum aus Fig. 3 ersichtlich, kann es sich bei den den Overdrive-Betrieb ermöglichenden zusätzlichen Organen auch um eine Kombination der in Fig. 1 und Fig. 2 vorgesehenen Lösungen handeln. Diese insgesamt fünf schaltbare Kupplungen SK1, SK2, SK3, SK4 und SK5 und die zugehörigen Getriebezüge aufweisende Antriebseinrichtung ist die günstigste und ermöglicht eine wahlweise Antriebsverbindung des Hydrowandlers 5

a) mit der eingangsseitigen Hauptwelle 9 über den Getriebezug 42, 43, 40, 41, 23, 24 bei geschlossener Kupplung SK4, oder

b) mit der ausgangsseitigen Hauptwelle 10 über den Getriebezug 47, 48, 40, 41, 23, 24 bei geschlossener Kupplung SK5.

Nachstehend ist im einzelnen auf die Vorgänge beim Übergang vom zweiten Betriebsbereich in den Overdrive-Betriebsbereich eingegangen.

Soll am Ende des zweiten Betriebsbereiches das Fahrzeug weiter beschleunigt werden, dann wird bei weiterhin geschlossen gehaltener Kupplung SK1 und offen gehaltener Kupplung SK2 generell die im ersten und zweiten Betriebsbereich geschlossene Kupplung SK3 geöffnet und damit der Hydrowandler 5 antriebsmäßig vom Hohlrad 18 getrennt. Gleichzeitig oder geringfügig zeitlich versetzt wird der Hydrowandler 5 dann

— im Fall gemäß Fig. 1 durch Schließen der Kupplung SK4 bei Synchrondrehzahl getrieblich mit der eingangsseitigen Hauptwelle 9,

— im Fall gemäß Fig. 2 und 3 durch Schließen der Kupplung SK5 bei Synchrondrehzahl getrieblich mit der ausgangsseitigen Hauptwelle 10 verbunden. Im Moment der Schließung der Kupplung SK4 bzw. SK5 sind beide Hydrowandler 5, 6 voll ausgeschwenkt, die Drehzahl des Hydrowandlers 6 beträgt etwa 2/3 der Drehzahl des Hydrowandlers 5. Der im zweiten Betriebsbereich als Pumpe arbeitende Hydrowandler 6 arbeitet im dritten Betriebsbereich weiterhin als Pumpe ; der im zweiten Betriebsbereich als Motor arbeitende Hydrowandler 5 arbeitet im dritten Betriebsbereich ebenfalls weiter als Motor. Im dritten Betriebsbereich bleibt der Hydrowandler 6 konstant auf voller Ausschwenkung gehalten, der Schwenkwinkel des Hydrowandlers 5 dagegen wird auf Null zurückgenommen, wobei der Schwenkwinkel Null am Ende des dritten Betriebsbereiches gegeben ist.

Im Fall von Fig. 1 ergibt sich durch den Anschluß des Hydrowandlers 5 an die eingangsseitige Hauptwelle 9 und damit dessen direkte Anbindung an den Antriebsmotor 1 (unter Umgehung des Planetendifferentialgetriebes 4) eine kurzfristige Erhöhung des hydrostatischen Leistungsanteiles von vorher 30 auf ca. 60% der Gesamtleistung. Diese Blindleistung fällt jedoch kaum ins Gewicht, weil in relativ kurzer Zeit ein neuer Grenzpunkt am Ende des dritten Betriebsbereiches erreicht ist. Beim Übergang vom dritten in den vierten Betriebsbereich ($n_{Ausgang}$ : $n_{Eingang}$ ca. 140% bis ca. 200%) wird nämlich die Arbeitsweise der beiden Hydrowandler 5, 6 durch hydrostatische Umschaltung geändert, das heißt, im vierten Bereich arbeitet der Hydrowandler 6 dann als Motor und der Hydrowandler 5 arbeitet dann als Pumpe. Der Umschaltpunkt, welcher den Übergang vom dritten in den vierten Betriebsbereich bestimmt, ist gekennzeichnet durch den Stillstand des kleinen Sonnenrades 13, weil in diesem Fall keine hydrostatische Leistung mehr vom Hydrowandler 5 auf den Hydrowandler 6 übertragen werden kann. Durch die Ausschwenkung des Hydrowandlers 5 erhöht sich im folgenden die Drehzahl des Hydrowandlers 6, was wiederum eine entsprechende Erhöhung der Drehzahl der ausgangsseitigen Hauptwelle 10 zur Folge hat. Am Ende dieses vierten Betriebsbereiches sind somit folgende Drehzahlen gegeben ; nämlich

— das ohne Last leerdrehende Hohlrad 18 dreht mit der dreifachen Drehzahl der eingangsseitigen Hauptwelle,

— der Steg 14 und damit auch die ausgangsseitige Hauptwelle 10 drehen mit doppelter Drehzahl der eingangsseitigen Hauptwelle 9.

In diesem vierten Betriebsbereich tritt keine hydrostatische Blindleistung auf, denn der Anteil der hydrostatischen Leistung an der Gesamtleistung des Leistungsverzweigungsgetriebes 2 ist verhältnismäßig gering und beträgt am Ende des vierten Betriebsbereiches ca. 33%.

Im Fall von Fig. 2 ergibt sich durch den Anschluß des Hydrowandlers 5 an die ausgangsseitige Hauptwelle 10 im Gegensatz zur Lösung gemäß Fig. 1 beim Betrieb innerhalb des dritten Betriebsbereiches keine hydrostatische Blindleistung, denn der Anteil der hydrostatischen Leistung an der Gesamtleistung des Leistungsverzweigungsgetriebes 2 bleibt trotz Erhöhung bis zum Ende des dritten Betriebsbereiches generell unter 50%. Dies ändert sich jedoch nach dem Übergang vom dritten in den vierten Betriebsbereich ($n_{Ausgang}$ : $n_{Eingang}$ ca. 140% bis ca. 200%), weil dabei nach Erreichen des Umschaltpunktes, welcher auch hier wie im Fall von Fig. 1 durch den Stillstand des kleinen Sonnenrades 13 gekennzeichnet ist und den Zustand betrifft, bei dem vom Hydrowandler 5 keine hydrostatische Leistung mehr auf den Hydrowandler 6 übertragen werden kann, sich die Drehrichtung des Hydrowandlers 6 umkehrt, dieser dann als Motor arbeitet und seine Leistung von dem nun als Pumpe arbeitenden Hydrowandler 5 erhält. Hierdurch erhöht sich zwangsläufig der hydrostatische Leistungsanteil an der Gesamtleistung des Leistungsverzweigungsgetriebes 2 auf einen Wert von ca. 60% am Ende des vierten Betriebsbereiches.

Diese Variante gemäß Fig. 2 eignet sich demnach besonders für Fahrzeuge, die viel im dritten Betriebsbereich, also dem unteren Overdrive-Bereich, und wenig bzw. selten im oberen Overdrive-Bereich betrieben werden.

Die best-mode-Lösung, mit der praktisch das Anfallen hydrostatischer Blindleistung vermeidbar ist, ist demnach jene gemäß Fig. 3, die die zusätzlichen Getriebe- und Kupplungsmittel der beiden Lösungen von Fig. 1 und 2 in sich vereinigt. Das Auftreten von Blindleistung läßt sich dabei gemäß einer ersten Methode durch folgende steuerungsseitige Einflußnahme auf das Getriebe gemäß Fig. 3 vermeiden, nämlich

a) beim Übergang vom zweiten in den dritten Betriebsbereich ($n_{Ausgang}$ : $n_{Eingang}$ ca. 80% bis ca. 140%) wird nach Öffnen der Kupplung SK3 der Hydrowandler 5 durch Schließen der Kupplung SK5 getrieblich mit der ausgangsseitigen Hauptwelle 10 verbunden, welcher Schaltzustand bis zum Ende des dritten Betriebsbereiches erhalten bleibt und entsprechende Verhältnisse wie im Fall von Fig. 2 hervorruft, und

b) beim Übergang vom dritten in den vierten Betriebsbereich ($n_{Ausgang}$ : $n_{Eingang}$ ca. 140% bis ca. 200%) wird die Kupplung SK5 wieder geöffnet und die Kupplung SK4 geschlossen und damit der Hydrowandler 5 von der ausgangsseitigen Hauptwelle 10 abgeschaltet und in Antriebsverbindung mit der eingangsseitigen Hauptwelle 9 gebracht, welcher Schaltzustand bis zum Ende des vierten Beriebsbereiches erhalten bleibt und entsprechende Verhältnisse wie im Fall von Fig. 1 hervorruft.

Das Auftreten von hydrostatischer Blindleistung läßt sich gemäß einer zweiten Methode jedoch auch durch folgende alternative Einflußnahme auf das Getriebe gemäß Fig. 3 vermeiden, nämlich

a) beim Übergang vom zweiten in den dritten Betriebsbereich ($n_{Ausgang}$ : $n_{Eingang}$ zwischen ca. 80% und ca. 140%) wird nach Öffnen der Kupplung SK3 der Hydrowandler 5 durch Schließen der Kupplung SK5 getrieblich mit der ausgangsseitigen Hauptwelle 10 verbunden, welcher Schaltzustand bis zu einem bestimmten Bereich vor der Drehrichtungsumkehr des Hydrowandlers 6 erhalten bleibt und entsprechende Verhältnisse wie im Fall von Fig. 2 hervorruft,

b) in einem gewissen Bereich vor der Drehrichtungsumkehr des Hydrowandlers 6 der andere Hydrowandler 5 durch Öffnen der Kupplung SK5 wieder von der ausgangsseitigen Hauptwelle 10 getrennt und durch Schließen der Kupplung SK4 mit der eingangsseitigen Hauptwelle 9 verbunden wird, in welchem Stadium ein Betrieb in einem vierten Betriebsbereich ($n_{Ausgang}$ : $n_{Eingang}$ zwischen ca. 110% und ca. 140%) erfolgt, und

c) nach Umkehr der Drehrichtung des Hydrowandlers 6 der andere Hydrowandler 5 in einem anschließenden letzten, fünften Betriebsbereich ($n_{Ausgang}$ : $n_{Eingang}$ zwischen ca. 140% und ca. 200%) bis zum Ende des Gesamtwandlungsbereiches über die geschlossen gehaltene Kupplung SK4 mit der eingangsseitigen Hauptwelle 9 verbunden bleibt, was in diesem Betriebsbereich Verhältnisse wie im Fall von Fig. 1 hervorruft.

Die Antriebseinrichtung gemäß Fig. 3 ist somit generell und mit besonderem Vorteil bei all jenen Fahrzeugen anwendbar, die viel und im gesamten Overdrive-Bereich betrieben werden.

## Patentansprüche

1. Antriebseinrichtung eines Fahrzeuges mit einem hydrostatisch-mechanischen Leistungsverzweigungsgetriebe (2) zwischen Antriebsmotor (1) und Achsantriebsstrang (11, 3, 3/1, 3/2) mit einem mindestens vierwelligen Planetendifferentialgetriebe (4) mit mindestens zwei Reihen von Planetenrädern (15, 16), zwei Sonnenrädern (12, 13), einem Steg (14) und einem Hohlrad (18), ferner mit zwei den Eingang bzw. Ausgang bildende und jeweils an verschiedene Wellen des Planetendifferentialgetriebes (4) angeschlossenen Hauptwellen (9, 10), und mit mindestens zwei Hydrowandlern (5, 6), die jeweils in mindestens einem Betriebsbereich an einer eigenen Welle des Planetendifferentialgetriebes (4) angeschlossen sind und wechselweise als Pumpe oder Motor arbeiten, wobei mindestens einer (6) der Hydrowandler (5, 6) bei zumindest annähernd stillstehendem anderen Hydrowandler (5) von der ausgangsseitigen Hauptwelle (10) zu dem nichtantriebsseitigen Sonnenrad (13) beim Übergang vom einen in den anderen Betriebsbereich über schaltbare Kupplungen (SK1, SK2) umschaltbar ist und im Zugbetrieb von Motor- auf Pumpenfunktion wechselt, dadurch gekennzeichnet, daß das hydrostatisch-mechanische Leistungsverzweigungsgetriebe (2) für einen extremen Overdrive-Betrieb mit einem Drehzahlverhältnis $n_{Ausgang}$ : $n_{Eingang}$ der beiden Hauptwellen (9, 10) > ca. 1,5 ausgestaltet ist und der besagte andere Hydrowandler (5) beim Übergang vom zweiten Betriebsbereich ($n_{Ausgang}$ : $n_{Eingang}$ ≥ ca. 0,5)in wenigstens einen weiteren in den Overdrive-Betrieb führenden Betriebsbereich mittels schaltbarer Kupplungen (SK3, SK4, SK5) von seiner momentanen Antriebsverbindung trennbar und bei Synchrondrehzahl getrieblich mit einer der beiden Hauptwellen (9, 10) verbindbar ist.

2. Antriebseinrichtung nach Anspruch 1, dadurch gekennzeichnet, daß der in den Overdrive-Betrieb gehende Betriebsbereich in zwei Teilbereiche untergliedert ist, dergestalt, daß ein dritter Betriebsbereich mit $n_{Ausgang}$ : $n_{Eingang}$ ≥ ca ca. 0,8 ≤ ca. 1,5 und ein letzter Betriebsbereich mit $n_{Ausgang}$ : $n_{Eingang}$ ca. 1,5 ≤ ca. 2 gegeben ist.

3. Antriebseinrichtung nach Anspruch 2, dadurch gekennzeichnet, daß der besagte andere Hydrowandler (5) beim Übergang vom zweiten in den nächsthöheren Betriebsbereich mittels einer schaltbaren Kupplung (SK3) getrieblich vom Hohlrad (18) des Planetendifferentialgetriebes (4) trennbar und mittels einer schaltbaren Kupplung (SK4) getrieblich mit der eingangsseitigen Hauptwelle (9) des Leistungsverzweigungsgetriebes (2) verbindbar ist (Fig. 1).

4. Antriebseinrichtung nach Anspruch 3, dadurch gekennzeichnet, daß sowohl im zweiten als auch im dritten Betriebsbereich der eine Hydrowandler (6) als Pumpe und der andere Hydrowandler (5) als Motor betrieben ist.

5. Antriebseinrichtung nach Anspruch 2, dadurch gekennzeichnet, daß der besagte andere Hydrowandler (5) beim Übergang vom zweiten in den nächsthöheren Betriebsbereich mittels einer schaltbaren Kupplung (SK3) getrieblich vom Hohlrad (18) des Planetendifferentialgetriebes (4) trennbar und mittels einer schaltbaren Kupplung (SK5) getrieblich mit der ausgangsseitigen Hauptwelle (10) des Leistungsverzweigungsgetriebes (2) verbindbar ist (Fig. 2).

6. Antriebseinrichtung nach einem der Ansprüche 3 oder 5, dadurch gekennzeichnet, daß beim Wechsel vom vorletzten in den letzten Betriebsbereich eine Umkehr der Drehrichtung des einen Hydrowandlers (6) erfolgt und danach der andere Hydrowandler (5) von vorheriger Motorfunktion auf danach gegebene Pumpenfunktion umgesteuert wird.

7. Antriebseinrichtung nach Anspruch 2, dadurch gekennzeichnet, daß der besagte andere Hydrowandler (5)

a) beim Übergang vom zweiten in den dritten Betriebsbereich mittels einer schaltbaren Kupplung (SK3) getrieblich vom Hohlrad (18) des Planetendifferentialgetriebes (4) getrennt und mittels einer schaltbaren Kupplung (SK5) getrieblich mit der ausgangsseitigen Hauptwelle (10) des Leistungsverzweigungsgetriebes (2) verbunden wird und dies bis zum Ende des dritten Betriebsbereiches bleibt, und

b) beim Übergang vom dritten in den vierten Betriebsbereich über die Kupplung (SK5) wieder von der ausgangsseitigen Hauptwelle (10) getrennt und über die schaltbare Kupplung (SK4) getrieblich mit der eingangsseitigen Hauptwelle (9) verbunden wird und dies bis zum Ende des vierten Betriebsbereiches bleibt.

8. Antriebseinrichtung nach Anspruch 2, dadurch gekennzeichnet, daß der besagte andere Hydrowandler (5)

a) beim Übergang vom zweiten in den dritten Betriebsbereich mittels einer schaltbaren Kupplung (SK3) getrieblich vom Hohlrad (18) des Planetendifferentialgetriebes (4) getrennt und mittels einer schaltbaren Kupplung (SK5) getrieblich mit der ausgangsseitigen Hauptwelle (10) des Leistungsverzweigungsgetriebes (2) verbunden wird,

b) vor der Drehrichtungsumkehr des Hydrowandlers (6) über die Kupplung (SK5) wieder von der ausgangsseitigen Hauptwelle (10) getrennt und über die schaltbare Kupplung (SK4) mit der eingangsseitigen Hauptwelle (9) verbunden wird, in welchem Stadium ein Betrieb in einem vierten Betriebsbereich erfolgt, und

c) nach Umkehr der Drehrichtung des Hydrowandlers (6) in einem anschließenden letzten, fünften Betriebsbereich über die Kupplung (SK4) mit der eingangsseitigen Hauptwelle (9) bis zum Ende des Gesamtwandlungsbereiches verbunden bleibt.

9. Antriebseinrichtung nach Anspruch 7, dadurch gekennzeichnet, daß die Schaltung der beiden Kupplungen (SK4, SK5) für den Wechsel vom dritten in den vierten Betriebsbereich bei Drehrichtungsumkehr des Hydrowandlers (6) erfolgt.

10. Antriebseinrichtung nach einem der Ansprüche 3 und 7, dadurch gekennzeichnet, daß zwischen Antriebsmotor (1) und Leistungsverzweigungsgetriebe (2) eine Übersetzung (1/2) ins Langsame angeordnet ist.

## Claims

1. A drive system of a vehicle with a hydrostatic-mechanical power-dividing gear unit (2) between the drive motor (1) and the axle drive train (11, 3, 3/1, 3/2) comprising an at least four-shaft planetary differential gear unit (4) with at least two rows of planetary wheels (15, 16), two sun wheels (12, 13), a frame (14) and an annulus (18), further comprising two main shafts (9, 10) forming the input and output respectively and connected in each case to a different shaft of the planetary differential gear unit (4), and comprising at least two hydroconverters (5, 6) each connected in at least one operating range to a respective shaft of the planetary differential gear unit (4) and operating alternately as a pump or a motor, wherein at least one (6) of the hydroconverters (5, 6) may be switched over, while the other hydroconverter (5) is at least approximately stationary, from the output-side main shaft (10) to the sun wheel (13) on the non-drive side during the transfer from one operating range to the other by way of switchable couplings (SK1, SK2), and in tractive operation changes from a motor to a pump function, characterised in that the hydrostatic-mechanical power-dividing gear unit (2) is adapted for an extreme overdrive operation with a speed ratio $n_{output} : n_{input}$ of the two main shafts (9, 10) > circa 1.5, and at the transfer from the second operating range ($n_{output} : n_{input} \geq$ circa 0.5) into at least one further operating range leading to overdrive operation, the said other hydroconverter (5) is separable by means of switchable couplings (SK3, SK4, SK5) from its instantaneous drive connection and at synchronous speed is drivingly connectible to one of the two main shafts (9, 10).

2. A drive system according to claim 1, characterised in that the operating range going into overdrive operation is subdivided into two part ranges such as to produce a third operating range with $n_{output} : n_{input} \geq$ circa $0.8 \leq$ circa 1.5 and a last operating range with $n_{output} : n_{input}$ circa $1.5 \leq$ circa 2.

3. A drive system according to claim 2, characterised in that at the transfer from the second operating range into the one immediately above, the said other hydroconverter (5) is drivingly separable by means of a switchable coupling (SK3) from the annulus (18) of the planetary differential gear unit (4) and is drivingly connectible by means of a switchable coupling (SK4) to the input-side main shaft (9) of the power dividing gear unit (2) (Fig. 1).

4. A drive system according to claim 3, characterised in that both in the second and in the third operating range, one hydroconverter (6) is operated as a pump and the other hydroconverter (5) is operated as a motor.

5. A drive system according to claim 2, characterised in that at the transfer from the second operating range to the one immediately alive, the said other hydroconverter (5) is drivingly separable by means of a switchable coupling (SK3) from the annulus (18) of the planetary differential gear unit (4) and is drivingly connectible by means of a switchable coupling (SK5) to the output-side main shaft (10) of the power dividing gear unit (2) (Fig. 2).

6. A drive system according to one of claims 3 or 5, characterised in that at the change from the penultimate to the last operating range, the direction of rotation of one hydroconverter (6) reverses and then the other hydroconverter (5) is changed over from the previous motor function to the subsequent pump function.

7. A drive system according to claim 2, characterised in that the said other hydroconverter (5)

a) at the transfer from the second to the third operating range, is drivingly separated by means of a switchable coupling (SK3) from the annulus (18) of the planetary differential gear unit (4) and is drivingly connected by means of a switchable coupling (SK5) to the output-side main shaft (10) of the power dividing gear unit (2) and remains thus until the end of the third operating range, and

b) at the transfer from the third into the fourth operating range, is separated again via the coupling (SK5) from the output-side main shaft (10) and is drivingly connected via the switchable coupling (SK4) to the input-side main shaft (9) and remains thus until the end of the fourth operating range.

8. A drive system according to claim 2, characterised in that the said other hydroconverter (5)

a) at the transfer from the second into the third operating range, is drivingly separated by means of a switchable coupling (SK3) from the annulus (18) of the planetary differential gear unit (4) and is drivingly connected by means of a switchable coupling (SK5) to the output-side main shaft (10) of the power dividing gear unit (2),

b) before the direction of rotation of the hydroconverter (6) is reversed, is separated again via the coupling (SK5) from the output-side main shaft (10) and is connected via the switchable coupling (SK4) to the input-side main shaft (9), in which stage operation in a fourth operating range takes place, and

c) after the direction of rotation of the hydroconverter (6) reverses, remains connected in a subsequent final, fifth operating range via the coupling (SK4) to the input-side main shaft (9) until the end of the whole conversion range.

9. A drive system according to claim 7, characterised in that the switching of the two couplings (SK4, SK5) for the change from the third to the fourth operating range takes place when the hydroconverter (6) reverses its direction of rotation.

10. A drive system according to one of claims 3 and 7, characterised in that a speed reducing ratio (1/2) is arranged between the drive motor (1) and the power dividing gear unit (2).

## Revendications

1. Dispositif d'entraînement d'un véhicule, avec une transmission de changement de couple (2) entre le moteur d'entraînement (1) et la ligne d'entraînement de l'essieu (11, 3, 3/1, 3/2) ; avec au moins un mécanisme différentiel planétaire à quatre arbres (4), avec au moins deux rangées de roues planétaires (15, 16), deux roues solaires (12, 13), une traverse (14) et une roue creuse (18), en outre, avec deux arbres principaux (9, 10) constituant l'entrée ou la sortie et raccordés respectivement à des arbres différents du mécanisme différentiel planétaire (4), et avec au moins deux convertisseurs hydrauliques (5, 6), qui sont respectivement raccordés, dans au moins une zone de fonctionnement, à un arbre particulier du mécanisme différentiel planétaire (4) et fonctionnent alternativement comme pompe ou comme moteur, cependant qu'au moins un (6) des convertisseurs hydrauliques (5, 6), tandis que l'autre convertisseur hydraulique (5) est au moins approximativement à l'arrêt, est susceptible d'être commuté par l'intermédiaire d'embrayages (SK1, SK2), de l'arbre principal (10) côté sortie vers la roue solaire (13) côté non entraîné, lors du passage d'une zone de fonctionnement dans l'autre, et passe en fonctionnement de traction de la fonction moteur à la fonction pompe, dispositif d'entraînement caractérisé en ce que la transmission hydraulique-mécanique de changement de couple (2) est prévue pour un fonctionnement en surmultiplication extrême avec un rapport des vitesses de rotation des deux arbres (9, 10) côté sortie et côté entrée supérieur à environ 1,5, et l'autre convertisseur hydraulique (5) précité, lors du passage de la deuxième zone de fonctionnement (rapport de la vitesse de rotation côté sortie à la vitesse de rotation côté entrée égal ou supérieur à environ 0,5) dans au moins une autre zone de fonctionnement aboutissant au fonctionnement en surmultiplication, est susceptible d'être séparé de sa liaison d'entraînement momentanée et est susceptible d'être relié au point de vue entraînement en synchronisme de vitesses, à un des deux arbres principaux (9, 10).

2. Dispositif d'entraînement selon la revendication 1, caractérisé en ce que la zone de fonctionnement allant au fonctionnement en surmultiplication est divisée en deux parties, de sorte qu'il y a une troisième zone de fonctionnement avec un rapport de la vitesse côté sortie à la vitesse côté entrée supérieur ou égal à environ 0,8 et inférieur ou égal à environ 1,5, et une dernière zone de fonctionnement avec un rapport de la vitesse côté sortie à la vitesse côté entrée d'environ 1,5, inférieur ou égal à environ 2.

3. Dispositif d'entraînement selon la revendication 2, caractérisé en ce que l'autre convertisseur hydraulique (5) précité, lors du passage de la deuxième zone de fonctionnement dans la zone immédiatement plus élevée, est susceptible d'être séparé du point de vue entraînement, par un embrayage (SK3), de la roue creuse (18) du mécanisme différentiel planétaire (4), et est susceptible d'être relié du point de vue entraînement, par un embrayage (SK4), à l'arbre principal (9) côté entrée de la transmission de changement de couple (2) (figure 1).

4. Dispositif d'entraînement selon la revendication 3, caractérisé en ce qu'aussi bien dans la deuxième zone de fonctionnement qu'également dans la troisième, l'un (6) des convertisseurs hydrauliques est exploité en tant que pompe et l'autre convertisseur hydraulique (5) en tant que moteur.

5. Dispositif d'entraînement selon la revendication 2, caractérisé en ce que l'autre convertisseur hydraulique (5) précité, lors du passage de la deuxième zone de fonctionnement dans la zone de fonctionnement immédiatement la plus élevée, est susceptible d'être séparé du point de vue entraînement, par un embrayage (SK3), de la roue creuse (18) du mécanisme différentiel planétaire (4), et est susceptible d'être relié du point de vue entraînement, par un embrayage (SK5), à l'arbre principal (10) côté sortie de la transmission de changement de couple (2) (figure 2).

6. Dispositif d'entraînement selon une des revendications 3 ou 5, caractérisé en ce que, lors du passage de la zone de fonctionnement précédente dans la dernière zone de fonctionnement, il s'effectue une inversion du sens de rotation de l'un (6) des convertisseurs hydrauliques, et qu'ensuite l'autre convertisseur hydraulique (5) passe de sa fonction de moteur à une fonction de pompe.

7. Dispositif d'entraînement selon la revendication 2, caractérisé en ce que l'autre convertisseur hydraulique (5) précité :

a) lors du passage de la deuxième zone de fonctionnement dans la troisième, est séparé du point de vue entraînement, par un embrayage (SK3), de la roue creuse (18) du mécanisme différentiel planétaire (4) et est relié du point de vue entraînement, par un embrayage (SK5), à l'arbre principal (10) de sortie de la transmission de changement de couple (2), et ceci subsiste jusqu'à la fin de la troisième zone de fonctionnement,

b) lors du passage de la troisième zone de fonctionnement dans la quatrième, il est à nouveau séparé, par l'embrayage (SK5), de l'arbre principal (10) de sortie, et il est relié du point de vue entraînement, par l'embrayage (SK4), à l'arbre principal (9) d'entrée, et ceci subsiste jusqu'à la fin de la quatrième zone de fonctionnement.

8. Dispositif d'entraînement selon la revendication 2, caractérisé en ce que l'autre convertisseur hydraulique (5) précité :

a) lors du passage de la deuxième zone de fonctionnement dans la troisième, est séparé du point de vue entraînement, par un embrayage (SK3), de la roue creuse (18) du mécanisme différentiel planétaire (4) et est relié du point de vue entraînement, par un embrayage (SK5), à l'arbre principal (10) de sortie de la transmission de changement de couple (2),

b) avant l'inversion du sens de rotation du convertisseur hydraulique (6), il est séparé à nouveau par l'embrayage (SK5), de l'arbre principal (10) côté sortie, et il est relié, par l'embrayage (SK4) à l'arbre principal (9) côté entrée, stade dans lequel un fonctionnement s'effectue dans une quatrième zone de fonctionnement,

c) après l'inversion du sens de rotation du convertisseur hydraulique (6) dans une cinquième et dernière zone de fonctionnement suivante, il reste relié, par l'embrayage (SK4), à l'arbre principal (9) côté entrée jusqu'à la fin de la zone de transformation totale.

9. Dispositif d'entraînement selon la revendication 7, caractérisé en ce que la commutation des deux embrayages (SK4, SK5) pour le passage de la troisième zone de fonctionnement dans la quatrième s'effectue lors de l'inversion du sens de rotation du convertisseur hydraulique (6).

10. Dispositif d'entraînement selon une des revendications 3 ou 7, caractérisé en ce qu'entre le moteur d'entraînement (1) et la transmission de changement de couple (2) est disposée une démultiplication de ralentissement.

Fig.1

Fig.2

Fig. 3